# EUROPÄISCHE PATENTSCHRIFT

(11) **EP 1 115 550 B1**
(45) Veröffentlichungstag und Bekanntmachung des Hinweises auf die Patenterteilung: **16.04.2003**
(21) Anmeldenummer: 99969371.6
(22) Anmeldetag: 24.08.1999
(51) Int. Cl.: B29C 47/90

(54) **VORRICHTUNG ZUR HERSTELLUNG VON KUNSTSTOFFROHREN**
DEVICE FOR PRODUCING PLASTIC PIPES
DISPOSITIF POUR LA PRODUCTION DE TUBES EN MATIERE PLASTIQUE

(30) Priorität: 22.09.1998 DE 19843340
(43) Veröffentlichungstag der Anmeldung: 18.07.2001
(60) Teilanmeldung: 02015151.0
(73) Patentinhaber: Egeplast Werner Strumann GmbH & Co. KG, 48268 Greven (DE); Krauss-Maffei Kunststofftechnik GmbH, 80997 München (DE)
(72) Erfinder: ULRICH, Herbert, D-48282 Emsdetten (DE); WERNER, Joachim, D-46499 Hamminkeln (DE)
(74) Vertreter: Habbel, Hans-Georg, Dipl.-Ing.
(86) Internationale Anmeldenummer: DE9902708
(87) Internationale Veröffentlichungsnummer: WO00016962

(56) Entgegenhaltungen:
- EP-A- 0 356 957
- EP-A- 0 425 944
- WO-A-96/36475
- DE-A- 2 412 818
- DE-A- 3 521 321
- DE-A- 4 002 884
- US-A- 3 958 913

## Beschreibung

Die Erfindung bezieht sich auf eine Vorrichtung zur Herstellung von Kunststoffrohren gemäß dem Oberbegriff des Hauptanspruches.

In Kunststoffrohre produzierenden Einrichtungen besteht das Problem, daß Rohre unterschiedlicher Außendurchmesser mit gleichzeitig unterschiedlichen Wanddicke hergestellt werden müssen. Im Stand der Technik ist es dabei erforderlich, daß entsprechend dem Außendurchmesser des Rohres und der gewünschten, üblicherweise in Abhängigkeit des Außendurchmessers genormten Wanddicke des Rohres entsprechende Werkzeuge ausgewechselt werden müssen. Dies bedingt ein Stillsetzen der Maschine, einen hohen Arbeitsaufwand für das Auswechseln der Werkzeuge und Verlust an Kunststoffmaterial, bis das neue Rohr wieder gezogen werden kann. Ein entsprechendes Ziehen des Rohres, um bei einem bestehenden Außendurchmesser ein Rohr geringerer Wandstärke herstellen zu können, verbietet sich deshalb, da die Molekülkette des Kunststoffes gereckt und damit orientiert wird, so daß dadurch die Festigkeit des Rohres negativ beeinflußt wird, der Schrumpfund die Faltenbildung aber gefördert werden.

Aus der gattungsbildenden DE 24 12 818 ist eine Vorrichtung zum Kalibrieren eines aus einer Strangpresse austretenden Rohres aus thermoplastischem Kunststoff bekannt, wobei bei dieser bekannten Anordnung in Produktionsrichtung des Rohres gesehen, Kalibrierlamellen aufeinanderfolgend angeordnet sind. Jede Kalibrierlamelle weist einen Kalibrierdurchlaß auf, der für alle aufeinanderfolgenden Kalibrierlamellen gleich und unveränderbar ist. Jede Kalibrierlamelle arbeitet mit einem nach oben abhebbaren Lamellensegment zusammen, das während der Anlaufphase der Produktion abgehoben werden kann, so daß das Einlegen des den Extruder bzw. den Rohrkopf verlassenden Rohres in den Kalibrierdurchlaß erleichtert wird. Eine Variation des Rohrdurchmessers während des Produktionsverfahrens ist hier nicht möglich und nicht nahegelegt.

Aus der DE 35 21 321 ist es bekanntgeworden, in einer Kalibrierstation Metallbälge vorzusehen, die durch Strecken oder Zusammendrücken in ihrem inneren Durchmesser verändert werden können. Hierdurch soll dem beim Abkühlen auftretenden Schwinden des Kunststoffmaterials sich ändernden Außendurchmesser entsprochen werden, um dadurch auch während der Abkühlphase und dem ggf. sich verringemden Außendurchmesser des Rohres ein gutes Führen des Rohres in der Kalibrierstation zu ermöglichen.

Aus der WO 95/27601 ist es bekanntgeworden, bei einem gattungsfremden Herstellungsverfahren für Kunststoffrohre im Inneren des zu bildenden Rohres Formwerkzeuge, die durch einzelne Rollen gebildet werden, vorzusehen, wobei durch ein mehr oder weniger Aufweiten des Außendurchmessers des von den Formwerkzeugen bedingten Umfangskreises der Rohrdurchmesser verändert werden kann. Hierbei soll aber das Rohr durch eine Platte gebildet werden, die um dieses Formwerkzeug herum gewunden wird, wobei die Endkanten der Platten miteinander verschweißt werden sollen. Besondere Druckrollen beaufschlagen die beim Verbinden der beiden Platten hergestellte Schweißnaht derart, daß nach außen hin diese Schweißnaht nicht mehr erkennbar sein soll.

Schließllich beschreibt die DE 40 02 884 A1 eine Einrichtung zum Extrudieren von Rohren, bei der eine nicht näher beschriebene Kalibriereinrichtung eingesetzt wird. Gegenstand der Lehre dieser Literaturstelle ist eine Messeinrichtung zur Bestimmung der Wanddicke des extrudierten und kalibrierten Rohres, wobei in Umfangsrichtung des Rohrquerschnittes mehrere Messköpfe vorgesehen sind, die an einem an der Kalibriereinrichtung abgestützten Halter angeordnet sind. Hierdurch wird der Vorteil erreicht, dass eine hohe Anzahl von Messsignalen ermöglicht wird, so dass dadurch eine sehr gute Überwachung der Dicke des extrudierten Rohrstranges erzielbar ist.

Der Erfindung liegt demgegenüber die Aufgabe zugrunde, eine Vorrichtung zu schaffen, um während der Produktionsphase des Rohres ohne Unterbrechung des Produktionsganges eine vollautomatisch gesteuerte Umstellung zwischen mehreren Kunststoffrohrdimensionen im kontinuierlichen Extrusionsprozeß zu erreichen, wobei der Außendurchmesser und die Rohrwanddicke entsprechend den Kundenwünschen bzw. der Normung aufeinander abgestimmt sind.

Diese der Erfindung zugrundeliegende Aufgabe wird durch die Lehre des Hauptanspruches gelöst.

Vorteilhafte Ausgestaltungen sind in den Unteransprüchen erläutert.

Der ggf. schon vordimensionierte Massestrang kann gemäß der Erfindung in eine Kalibrierstation eintreten, in der unterschiedliche Rohrdimensionen einstellbar sind. Zwar ist es aus der WO 96/36 457 bekannt, geringfügige Kalibriereinstellungen in einer Kalibrierstation dadurch vorzunehmen, daß durch eine Keilwirkung einzelne offene Kalibrierringe geringfügig in ihrem Durchmesser verändert werden können. Mit einer solchen Anordnung ist aber eine Variation von Rohraußendimension nicht erreichbar, sondern es wird lediglich dem Schrumpfverhalten entgegengewirkt.

Der gemäß der Erfindung vorgesehene Kalibrierstation wird vorzugsweise durch eine Vielzahl von Lamellen gebildet, die an der Außenseite des zu kalibrierenden Rohres über den Umfang verteilt und im Abstand zueinander angeordnet jeweils einen Lamellenkranz bildend vorgesehen sind. Hierbei sind in Produktionsrichtung des Rohres gesehen eine Vielzahl solcher Lamellenkränze innerhalb der Kalibrierstation angeordnet, wobei die einzelnen Lamellen der einzelnen Lamellenkränze auf Lücke zueinander stehen, so daß eine problemlose Verstellung der einzelnen Lamellen des einzelnen Kranzes gegenüber den Lamellen des nachfolgenden Kranzes oder des vorhergehenden Kranzes möglich ist.

Die Verstellung der Lamellen erfolgt motorisch oder von Hand, wobei durch eine einzige Handsteuerung alle Lamellenkränze gleichzeitig verstellt werden können.

Die Rundung der Lamellen, mit der diese an der Außenseite des Rohres anliegen, kann dem größten zu fahrenden Rohrdurchmesser entsprechen. Werden kleinere Rohrdurchmesser gefahren, ist das behandelte Rohr also nicht ideal rund, sondern setzt sich aus kleinen, aneinander anliegenden Rundungen zusammen, die sich dann innerhalb des Kalibrierbades ausgleichen.

Anstelle der vorbeschriebenen Lamellen können auch Verstellsegmente vorgesehen sein, die einen in Längsrichtung des Rohres gesehen rohrförmigen Körper schaffen, wobei die diesen Körper bildenden einzelnen Segmentstreifen sich verzahnend ineinander greifen, so daß auch bei Verstellungen auf einen größeren Durchmesser am Rohr immer noch Bereiche dieser Segemente anliegen.

Auch ist es möglich, die Kalibrierwerkzeuge durch an der Außenseite des Rohres anliegende Rollen zu erstellen, die über Federn oder Hebel gesteuert einen Rohraußenumfang definieren, der der gewünschten Rohrdimension entspricht.

Ein Ausführungsbeispiel der Erfindung wird nachfolgend anhand der Zeichnung erläutert. Die Zeichnung zeigt dabei in
- Fig. 1: eine Gesamtansicht einer Produktionseinrichtung, in
- Fig. 2: in Produktionsrichtung gesehen einen Schnitt durch einen Kalibrierkopf, in
- Fig. 3: im Schnitt gemäß der Linie 3 - 3 in Fig. 2 die hintereinander angeordneten Lamellenkränze und in
- Fig. 4: eine abgeänderte Ausführungsform.

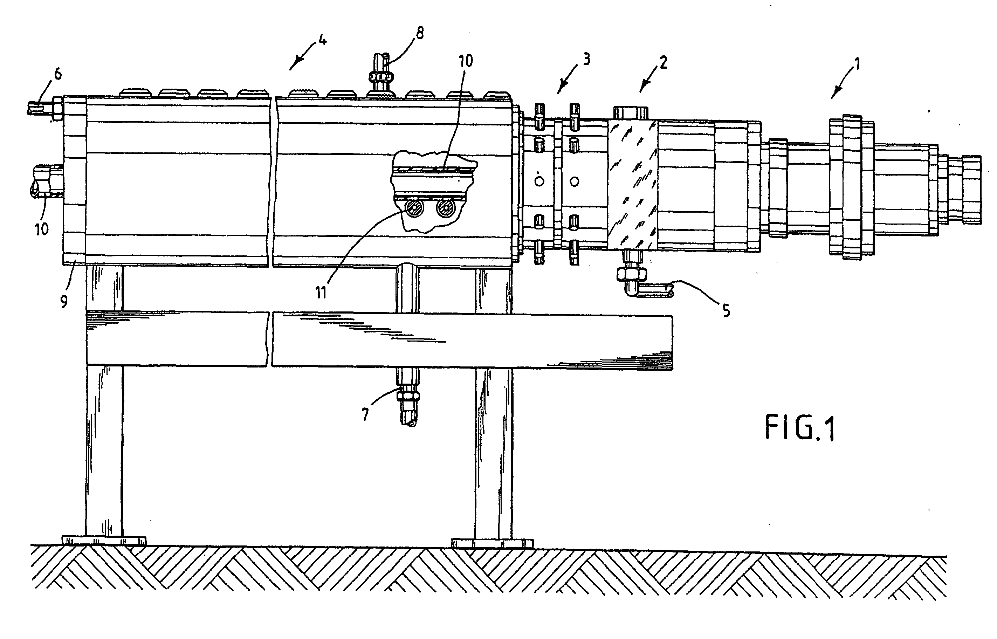

In Fig. 1 ist ein verstellbarer Rohrkopf erkennbar, der in Produktionsrichtung gesehen an einen in der Zeichnung nicht dargestellten Extruder anschließt. An den verstellbaren Rohrkopf 1 schließt sich eine Vakuum-Saugglocke 2 an, die mit einem Vakuumanschluß 5 ausgerüstet ist, in der Meßvorrichtungen vorgesehen sind, die in Abhängigkeit des gewünschten Rohraußendurchmessers, das in der Saugglocke herrschende Vakuum einstellen, so daß dadurch der rohrförmige Schmelzestrom auf den gewünschten Außendurchmesser eingestellt wird, d. h. aufgesaugt wird, wobei in der Vakuum-Saugglocke 2 bereits eine Vorkühlung des Schmelzestranges erfolgen kann. In der Vakuum-Saugglocke 2 kann in Verbindung mit dem verstellbaren Rohrkopf eine genaue Rohrwanddicke eingestellt werden, wobei die Rohrwanddicke in Abhängigkeit des Außendurchmessers des Rohres variiert werden kann.

An die Vakuum-Saugglocke 2 schließt sich eine Kalibrierstation 3 an. Hier erfolgt durch eine mechanische Zentralverstellung das genaue Kalibrieren des Außendurchmessers des Schmelzestranges und des schon teilweise ausgehärteten Rohres, wobei diese Kalibrierstation für alle in Frage kommenden Kunststoffe einsetzbar ist. In dieser Kalibrierstation können mehrere Dimensionen auch mit den unterschiedlichen Wanddicken eingestellt werden.

In einem sich in Produktionsrichtung gesehen daran anschließenden Vakuum-Kalibrierbad 4 erfolgt dann das Auskühlen und Aushärten des Kunststoffrohres durch Sprühwasser, wobei in der Zeichnung ein Wasserzulauf 6 und ein Wasserabfluß 7 erkennbar ist. Weiterhin schließt an das Vakuum-Kalibrierbad 4 ein Vakuumanschluß 8 an und das sich in dem Vakuum-Kalibrierbad 4 befindende Rohr 10 läuft über Stützrollen 11, die auch als Kalibrierrollen bezeichnet werden können und sich auf den gewünschten Rohrdurchmesser einstellen lassen. Die Oberfläche des Rohres 10 ist relativ hart und das Rohr 10 verläßt das Vakuum-Kalibrierbad 4 durch eine Vakuumabdichtung 9, die sich entweder selbständig auf den Rohrdurchmesser einstellt oder in Abhängigkeit der eingestellten Rohrdimensionen in derKalibrierstation 3 und/oder im Vakuum-Kalibrierbad 4 eingestellt wird. In der Vakuumabdichtung 9 können Formrollen angeordnet sein, die hydraulisch oder durch mechanische Federn betätigt werden, wobei gleichzeitig hier in den Durchlauf des Rohres Wasser zur Schmierung und Abdichtung eingeführt werden kann.

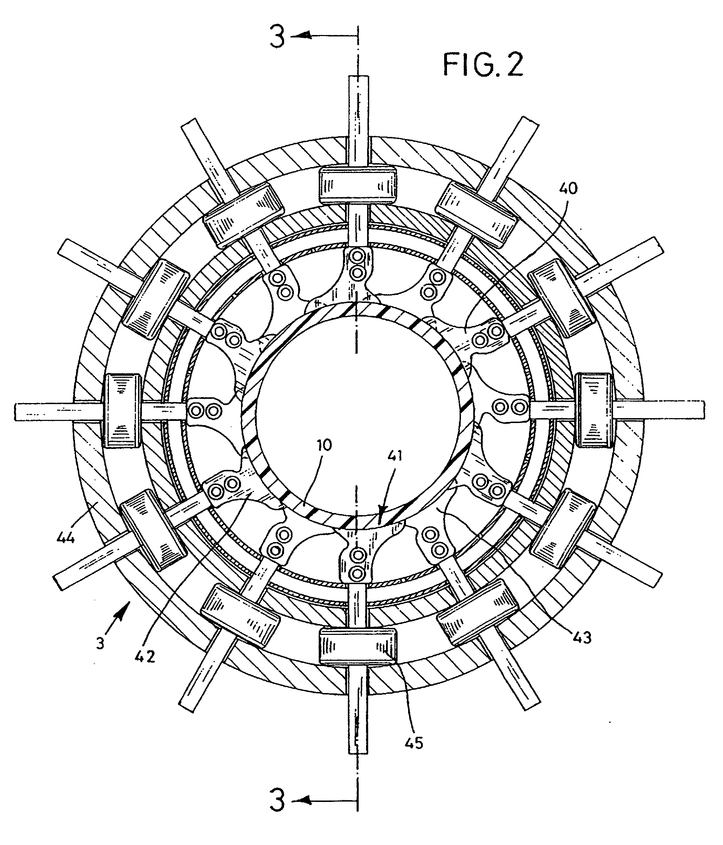

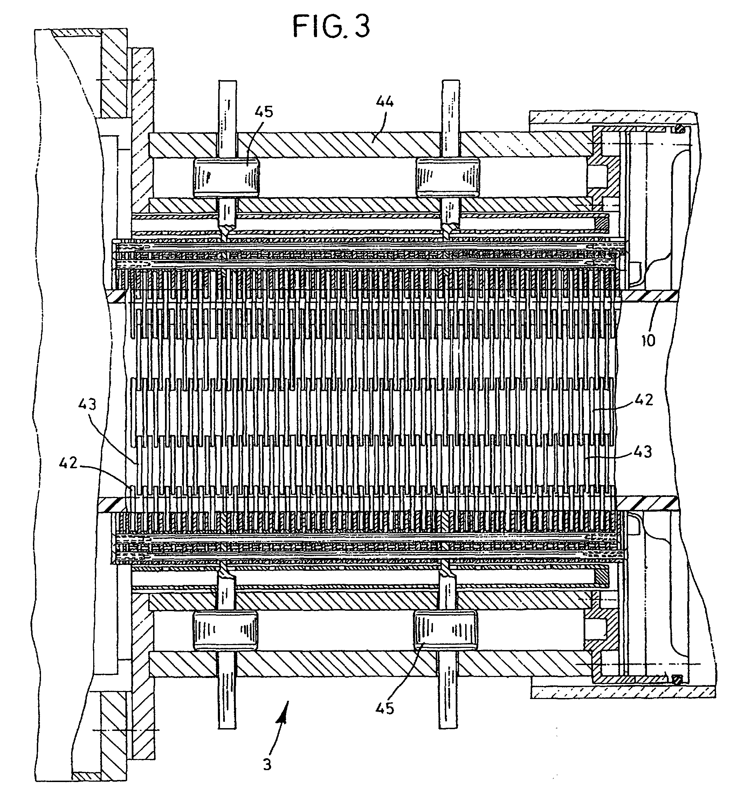

Die Fig. 2 und 3 zeigen Schnitte durch eine Ausführungsform der Kalibrierstation 3. Es ist erkennbar, daß innerhalb der Außenwandung 44 der Kalibrierstation eine Vielzahl von Lamellen 40 angeordnet ist, die über den Umfang des Rohres 10 verteilt an der Rohraußenwandung des Rohres 10 anliegen. Die anliegende Kante 41 jeder Lamelle 40 weist dabei eine Rundung auf, die dem größtmöglichen Außendurchmesser des Rohres 10 entspricht. Aus Fig. 2 und Fig. 3 ist erkennbar, daß eine Vielzahl von Lamellenkränzen 42 und 43 hintereinander in Produktionsrichtung des Rohres gesehen angeordnet sind. Bei der Darstellung in Fig. 3 sind fünfundvierzig Lamellenkränze angeordnet und gemäß Fig. 2 wird jeder Lamellenkranz 42 oder 43 durch sechs Lamellen 40 gebildet, jedoch ist hierauf die Erfindung in keiner Weise beschränkt.

Bei der Ausführungsform gemäß Fig. 2 sind Stellmotore 45 vorgesehen, die gemeinsam gesteuert ein gemeinsames Verstellen aller Lamellenkränze bewirken, wobei auch hier die Verstellung der Stellmotore 45 zentral gesteuert mit der entsprechenden Steuerung in der Sauggruppe 2 und dem Kalibrierbad 4 erfolgen kann.

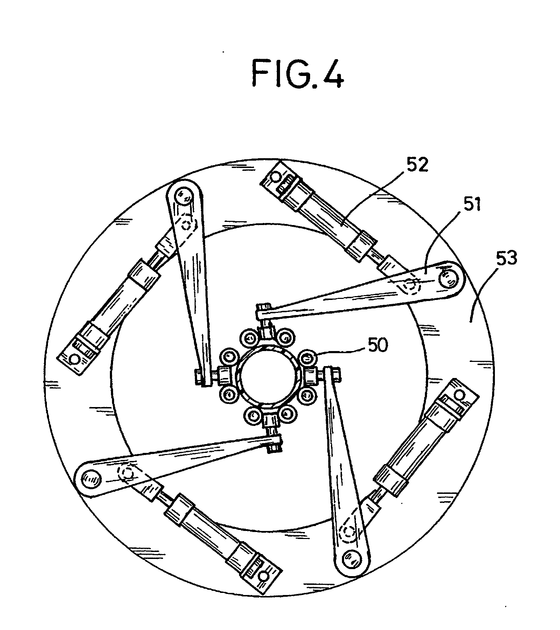

Fig. 4 zeigt eine Ausführungsform, bei der eine Vielzahl von Einzelrollen 50 an der Außenwand des herzustellenden Rohres anliegen, wobei die Rollen von Hebel 51 getragen werden, die über Stellvorrichtungen beweglich sind, so daß dadurch der gewünschte Innendurchmesser des Rollenkreises eingestellt werden kann. Die Stellvorrichtungen 52 und die Hebel 51 sind an einem Stellrad 53 angeordnet, daß über eine motorische Einrichtung umlaufend bewegt werden kann.

## Patentansprüche

1. Vorrichtung zur Herstellung von Kunststoffrohren mit einem Extruder, einem sich in Produktionsrichtung anschließenden Rohrkopf (1) und einer Kalibrierstation (3), die Kalibrierwerkzeuge (40) aufweist, die der Außenwandung des Rohres (10) anliegen, **dadurch gekennzeichnet, daß** als Kalibrierwerkzeuge eine Vielzahl von Lamellen (40) über den Umfang des zu kalibrierenden Rohres (10) aufeinanderfolgend im Abstand voneinander verteilt angeordnet sind, wobei auch in Produktionsrichtung des Rohres (10) gesehen, eine Vielzahl solcher Lamellenkränze (42, 43) vorgesehen sind, deren jeweilige Lamellen (40) auf Lücke zu den Lamellen (40) des vorhergehenden Lamellenkranzes angeordnet sind.

2. Vorrichtung nach Anspruch 1, **dadurch gekennzeichnet, daß** die Verstellung der Lamellen (40) motorisch erfolgt.

3. Vorrichtung nach Anspruch 1, **dadurch gekennzeichnet, daß** die Verstellung der Lamellen von Hand erfolgt.

4. Vorrichtung nach Anspruch 1, **dadurch gekennzeichnet, daß** die Lamellen als Verstellsegmente ausgebildet sind, die einen in Längsrichtung des Rohres gesehen ringförmigen Körper schaffen, wobei die diesen Körper bildenden, einzelnen Segmentstreifen sich verzahnend ineinandergreifen.

5. Vorrichtung nach dem Oberbegriff des Anspruches 1, **dadurch gekennzeichnet, daß** die Kalibrierwerkzeuge durch Rollen gebildet sind, die sich an die Außenseite des Rohres anlegen und der durch die Rollen gebildete theoretische Durchmesser verstellbar ist.

## Claims

1. Apparatus for producing plastic pipes, having an extruder, a pipehead (1) following in the production direction, and a calibrating station (3) which has calibrating tools (40) which bear against the outer wall of the pipe (10), **characterized in that**, as calibrating tools, a multiplicity of plates (40) are distributed over the circumference of the pipe (10) to be calibrated in such a way as to follow one another at a distance apart, a multiplicity of such plate rings (42, 43) also being provided as viewed in the production direction of the pipe (10), the respective plates (40) of which are staggered relative to the plates (40) of the preceding plate ring.

2. Apparatus according to Claim 1, **characterized in that** the plates (40) are adjusted by motor operation.

3. Apparatus according to Claim 1, **characterized in that** the plates are adjusted manually.

4. Apparatus according to Claim 1, **characterized in that** the plates are designed as adjusting segments which, as viewed in the longitudinal direction of the pipe, create an annular body, the individual segment strips which form this body engaging with one another in an interlocking manner.

5. Apparatus according to the preamble of Claim 1, **characterized in that** the calibrating tools are formed by rollers which abut against the outside of the pipe, and the theoretical diameter formed by the rollers is adjustable.

## Revendications

1. Dispositif pour la fabrication de tubes en matière plastique, comprenant une extrudeuse, une tète à tubes (1) qui y fait suite dans le sens de la production, et une station de calibrage (3) qui présente des outils de calibrage (40) qui sont en contact avec la paroi extérieure du tube (10), **caractérisé en ce qu'**en qualité d'outils de calibrage, une pluralité de lamelles (40) sont réparties, à écartement l'une de l'autre, en se succédant sur la périphérie du tube (10) à calibrer, et il est prévu, également vu dans le sens de la production du tube (10), une pluralité de couronnes de lamelles (42, 43), les lamelles (40) de chaque couronne étant disposées en quinconce par rapport aux lamelles (40) de la couronne de lamelles précédente.

2. Dispositif selon la revendication 1, **caractérisé en ce que** le réglage des lamelles (40) s'effectue au moteur.

3. Dispositif selon la revendication 1, **caractérisé en ce que** le réglage des lamelles s'effectue à la main.

4. Dispositif selon la revendication 1, **caractérisé en ce que** les lamelles sont constituées par des segments réglables qui créent un corps annulaire, vu dans la direction longitudinale du tube, les différentes bandes de segments qui forment ce corps engrenant les unes dans les autres à la façon d'une denture.

5. Dispositif selon le préambule de la revendication 1, **caractérisé en ce que** les outils de calibrage sont formés par des rouleaux qui sont en contact avec la surface extérieure du tube et le diamètre théorique formé par le rouleau est réglable.
